# FASCICULE DE BREVET EUROPEEN

(11) **EP 3 853 391 B1**
(45) Date de publication et mention de la délivrance du brevet: **21.02.2024**
(21) Numéro de dépôt: 19790677.9
(22) Date de dépôt: 19.09.2019
(51) Int. Cl.: C22C 21/06, C22C 21/16, B33Y 70/00, B29C 64/153, B29C 64/118

(54) **PROCÉDÉ DE FABRICATION D'UNE PIÈCE EN ALLIAGE D'ALUMINIUM**
VERFAHREN ZUR HERSTELLUNG EINES GEGENSTANDS AUS EINER ALUMINIUMLEGIERUNG
PROCESS FOR THE MANUFACTURE OF A COMPONENT MADE FROM AN AL-ALLOY

(30) Priorité: 21.09.2018 FR 1871070
(43) Date de publication de la demande: 28.07.2021
(73) Titulaire: C-Tec Constellium Technology Center, 38341 Voreppe (FR)
(72) Inventeur: CHEHAB, Bechir, 38500 VOIRON (FR)
(74) Mandataire: Constellium - Propriété Industrielle
(86) Numéro de dépôt international: PCT/FR2019/052204
(87) Numéro de publication internationale: WO 2020/058646

(56) Documents cités:
- JP-A- H05 179 384
- B. ZLATICANIN ET AL: "Effect of magnesium content on microstructure and properties of Al-Cu-Mg alloys", MATERIALS SCIENCE AND TECHNOLOGY, vol. 20, no. 1, 1 janvier 2004 (2004-01-01), pages 138-140, XP055561286, ISSN: 0267-0836, DOI: 10.1179/174328413X13789824293588

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, visant à enlever de la matière. Autrefois cantonnée au prototypage, la fabrication additive est à présent opérationnelle pour fabriquer des produits industriels en série, y compris des pièces métalliques.

Le terme « fabrication additive » est défini selon la norme française XP E67-001 : "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015006447. L'application de couches successives est généralement réalisée par application d'un matériau dit d'apport, puis fusion ou frittage du matériau d'apport à l'aide d'une source d'énergie de type faisceau laser, faisceau électronique, torche plasma ou arc électrique. Quelle que soit la modalité de fabrication additive appliquée, l'épaisseur de chaque couche ajoutée varie de quelques dizaines de microns à quelques millimètres.

D'autres publications décrivent l'utilisation d'alliages d'aluminium en tant que matériau d'apport, sous la forme d'une poudre ou d'un fil. La publication Gu J. "Wire-Arc Additive Manufacturing of Aluminium" Proc. 25th Int. Solid Freeform Fabrication Symp., August 2014, University of Texas, 451-458, décrit un exemple d'application d'une modalité de fabrication additive désignée par le terme WAAM, acronyme de "Wire + Arc Additive Manufacturing" sur des alliages d'aluminium pour la constitution de pièces de faible porosité destinées au domaine de l'aéronautique. Le procédé WAAM est basé sur le soudage à l'arc. Il consiste à empiler différentes couches successivement les unes sur les autres, chaque couche correspondant à un cordon de soudure formé à partir d'un fil. Ce procédé permet d'obtenir une masse cumulée de matériau déposé relativement importante, pouvant atteindre 3 kg/h. Lorsque ce procédé est mis en oeuvre en utilisant un alliage d'aluminium, ce dernier est généralement un alliage de type 2319. La publication Fixter "Preliminary Investigation into the Suitability of 2xxx Alloys for Wire-Arc Additive Manufacturing" étudie les propriétés mécaniques de pièces fabriquées à l'aide de la méthode WAAM, à l'aide de plusieurs alliages d'aluminium. Plus particulièrement, la teneur en cuivre étant maintenue entre 4 et 6 % en masse, les auteurs ont fait varier la teneur en magnésium et déterminé la sensibilité de fissuration à chaud, usuellement désignée par le terme "hot cracking susceptibility", d'alliages 2xxx lors de la mise en oeuvre d'un procédé de type WAAM. Les auteurs concluent qu'une teneur optimale en magnésium est de 1.5 %, et que l'alliage d'aluminium 2024 est particulièrement approprié. JPH 05 179 384 concerne un alliage d'aluminium à haute résistance et haute ténacité qui a été préparé par le procédé de dépôt par pulvérisation.

D'autres méthodes de fabrication additive sont utilisables. Citons par exemple, et de façon non limitative, la fusion ou le frittage d'un matériau d'apport prenant la forme d'une poudre. Il peut s'agir de fusion ou de frittage laser. La demande de brevet US20170016096 décrit un procédé de fabrication d'une pièce par fusion localisée obtenue par l'exposition d'une poudre à un faisceau d'énergie de type faisceau d'électrons ou faisceau laser, le procédé étant également désigné par les acronymes anglosaxons SLM, signifiant "Selective Laser Melting" ou "EBM", signifiant "Electro Beam Melting". La poudre est constituée d'un alliage d'aluminium dont la teneur en cuivre est comprise entre 5 % et 6 % en masse, la teneur en magnésium étant comprise entre 2.5 % et 3.5 % en masse.

La publication Qi Zewu "Microstructure and mechanical properties of double-wire + arc additively manufactured Al-Cu-Mg alloys", Journal of Materials Processing Technology, 255 (2018), 345-353, présente le procédé WAAM comme étant particulièrement adapté à la fabrication de pièces en alliage d'aluminium, destinées à l'industrie aéronautique. Cette publication analyse les propriétés de pièces obtenues par le procédé WAAM. Pour cela, deux fils d'apport différents sont utilisés, permettant d'obtenir différentes teneurs en Cu et Mg. On obtient ainsi des pièces dont la fraction massique en Cu et Mg est respectivement : 3.6 % - 2.2 %, 4 % - 1.8 %, 4.4 % - 1.5 %. La publication montre que la dureté est d'autant plus élevée que le ratio Cu/Mg est élevé.

Les propriétés mécaniques des pièces d'aluminium obtenues par fabrication additive dépendent de l'alliage formant le métal d'apport, et plus précisément de sa composition ainsi que des traitements thermiques appliqués suite à la mise en oeuvre de la fabrication additive.

Les inventeurs ont déterminé une composition d'alliage qui, utilisée dans un procédé de fabrication additive, permet d'obtenir des pièces aux performances mécaniques remarquables, sans qu'il soit nécessaire de mettre en oeuvre des traitements thermiques de type mise en solution et trempe.

### EXPOSE DE L'INVENTION

L'invention est donnée par les revendications.

Un premier objet de l'invention est un procédé de fabrication d'une pièce comportant une formation de couches métalliques successives, superposées les unes aux autres, chaque couche étant formée par le dépôt d'un métal d'apport, le métal d'apport étant soumis à un apport d'énergie de façon à entrer en fusion et à constituer, en se solidifiant, ladite couche, dans lequel le métal d'apport est un alliage d'aluminium comportant les éléments d'alliage suivant (% en poids) :
- Cu : 5 % - 8 % ;
- Mg : 4 % - 8 % ;
- éventuellement Si : 0 % - 8 % ;
- éventuellement Zn : 0 % - 10 % ;
ainsi que :
- autres éléments : < 3 % individuellement et de préférence < 2 % individuellement, les autres éléments comportant : Sc et/ou Fe et/ou Mn et/ou Ti et/ou Zr et/ou V et/ou Cr et/ou Ni;
- impuretés : < 0.05 % individuellement, et au total < 0.15 %;
reste aluminium.

L'alliage d'aluminium peut être tel que Mg : 4.5 % - 8 %, et de préférence tel que Mg : 5 % - 8 %. Chaque couche peut notamment décrire un motif défini à partir d'un modèle numérique. Le terme autres éléments désigne des éléments d'addition, différents des éléments d'alliage Cu, Mg, et des éventuels éléments d'alliage Si et Zn présents dans l'alliage.

De préférence, la fraction massique des autres éléments, pris en totalité, est inférieure à 10%, et de préférence inférieure à 5 %.

L'alliage d'aluminium peut notamment comporter, parmi les autres éléments :
- Fe : < 2%, de préférence 0.05 % - 2 %, plus préférentiellement 0.05 % - 1 %, et encore plus préférentiellement 0.05 % - 0.5 % ;
- et/ou Mn : < 2 %, de préférence 0.05 % - 2 %, plus préférentiellement 0.05 % - 1 %, et encore plus préférentiellement 0.05 % - 0.4 %;
- et/ou Ti :< 2 %, de préférence 0.05 % - 2 %, plus préférentiellement 0.05 % - 1 %, et encore plus préférentiellement 0.05 % - 0.4 % ;
- et/ou Zr : < 2 %, de préférence 0.05 % - 2 %, plus préférentiellement 0.05 % - 1 %, et encore plus préférentiellement 0.05 % - 0.5 % ;
- et/ou V :< 2 %, de préférence 0.05 % - 2 %, plus préférentiellement 0.05 % - 1 %, et encore plus préférentiellement 0.08 % - 0.5 % ;
- et/ou Sc : < 2 %, de préférence 0.05 % - 1 %, et plus préférentiellement 0.05 % - 0.5 % ;
- et/ou Cr : < 2 %, de préférence 0.05 % - 2 %, plus préférentiellement 0.05 % - 1 %, et encore plus préférentiellement 0.05 % - 0.5 % ;
- et/ou Ni : < 2 %, de préférence 0.05 % - 2 %, plus préférentiellement 0.05 % - 1 %, et encore plus préférentiellement 0.05 % - 0.5 %.

Selon un mode de réalisation, l'alliage d'aluminium comporte Si : 0.05 % - 1 %., de préférence 0.2 % - 1 % Selon un autre mode de réalisation, l'alliage d'aluminium comporte Si > 1 %. Par exemple, Si : 1 % - 8 %.

L'alliage d'aluminium peut comporter Sc : 0.05 % - 1 % et/ou Zr : 0.05 % - 2 %, de préférence Sc : 0.05 % - 1 % et Zr : 0.05 % - 2 %.

Selon une variante, l'alliage d'aluminium peut ne pas comporter Zn ou alors dans des quantités inférieures à 0.05 %, en tant qu'impureté.

Selon une variante, l'alliage d'aluminium peut être tel que :
- Cu : 5 % - 7 % ;
- Mg : 4 % - 6 %, et de préférence 4.5 % - 8 % ;
- Si : < 1 % ;
- Fe : < 1 % ;
- Mn : < 0.4 % et de préférence 0.05 % - 0.4 % ;
- Ti : < 0.5 % et de préférence 0.05 % - 0.4 % ;
- Zr : < 0.5 % et de préférence 0.05 % - 0.5 % ;
- V : < 0.5 % et de préférence 0.08 % - 0.5 %.

Selon une autre variante, l'alliage d'aluminium peut être tel que :
- Cu : 5 % - 8 % ;
- Mg : 4 % - 8 %, et de préférence 4.5 % - 8 % ;
- Si : 1 % - 8 % ;
- Sc : < 0.5 % ;
- Fe : < 1 % ;
- Mn : < 0.4 % et de préférence 0.05 % - 0.4 % ;
- Ti : < 0.5 % et de préférence 0.05 % - 0.4 % ;
- Zr : < 0.5 % et de préférence 0.05 % - 0.5 % ;
- V : < 0.5 % et de préférence 0.08 % - 0.5 %.

De préférence, l'alliage selon la présente invention comprend une fraction massique d'au moins 85 %, plus préférentiellement d'au moins 90 % d'aluminium.

Le procédé peut comporter, suite à la formation des couches, une application d'au moins un traitement thermique. Le traitement thermique peut être ou comporter un revenu ou un recuit. Il peut également comporter une mise en solution et une trempe. Il peut également comporter une compression isostatique à chaud.

Selon un mode de réalisation avantageux, le procédé ne comporte pas de traitement thermique de type trempe suite à la formation des couches. Ainsi, de préférence, le procédé ne comporte pas d'étapes de mise en solution suivie d'une trempe.

Selon un autre mode de réalisation, le métal d'apport est issu d'un fil d'apport, dont l'exposition à un arc électrique résulte en une fusion localisée suivie d'une solidification, de façon à former une couche solide. Selon un mode de réalisation, le métal d'apport prend la forme d'une poudre, dont l'exposition à un faisceau de lumière ou de particules chargées résulte en une fusion localisée suivie d'une solidification, de façon à former une couche solide. La fusion de la poudre peut être partielle ou totale. De préférence, de 50 à 100 % de la poudre exposée entre en fusion, plus préférentiellement de 80 à 100 %.

Un deuxième objet de l'invention est un matériau d'apport, notamment un fil d'apport ou une poudre, destiné à être utilisé en tant que matériau d'apport d'un procédé de fabrication additive, caractérisé en ce qu'il est constitué d'un alliage d'aluminium, comportant les éléments d'alliage suivants (% en poids) :
- Cu : 5 % - 8 % ;
- Mg : 4 % - 8 % ;
- au moins un parmi : Sc : 0.05 % - 1 % et/ou Zr : 0.05 % - 2 %, de préférence Sc : 0.05 % - 1 % et Zr : 0.05 % - 2 %.;
- éventuellement Si : 0 % - 8 % ;
- éventuellement Zn : 0 % - 10 % ;
ainsi que :
- autres éléments : < 2 % individuellement, les autres éléments comportant : Fe et/ou Mn et/ou Ti et/ou V et/ou Cr et/ou Ni;
- impuretés : < 0.05 % individuellement, et au total < 0.15 %;
reste aluminium.

L'alliage d'aluminium formant le matériau d'apport peut présenter les caractéristiques décrites en lien avec le premier objet de l'invention.

Lorsque le matériau d'apport se présente sous la forme d'un fil, le diamètre du fil peut notamment être compris entre 0.5 mm et 3 mm, et de préférence compris entre 0.5 mm et 2 mm, et encore de préférence compris entre 1 mm et 2 mm.

Le matériau d'apport peut se présenter sous la forme d'une poudre. La poudre peut être telle qu'au moins 80 % des particules composant la poudre ont une taille moyenne dans la plage suivante : 5 µm à 100 µm, de préférence de 5 à 25 µm, ou de 20 à 60 µm.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

[Fig 1] La figure 1 est un schéma illustrant un procédé de fabrication additive de type WAAM.
[Fig 2A] La figure 2A schématise la géométrie de pièces de test obtenues par moulage selon une première vue.
[Fig 2B] La figure 2B schématise la géométrie de pièces de test obtenues par moulage selon une deuxième vue.
[Fig 3] La figure 3 montre des résultats de mesures de la dureté effectuées le long de pièces de test.
[Fig 4] La figure 4 est un schéma illustrant un procédé de fabrication additive de type SLM.

### EXPOSE DE MODES DE REALISATION PARTICULIERS

Dans la description, sauf indication contraire :
- la désignation des alliages d'aluminium est conforme à la nomenclature de The Aluminum Association ;
- les teneurs en éléments chimiques sont désignées en % et représentent des fractions massiques. La notation x % - y % signifie supérieur ou égal à x % et inférieur ou égal à y%.

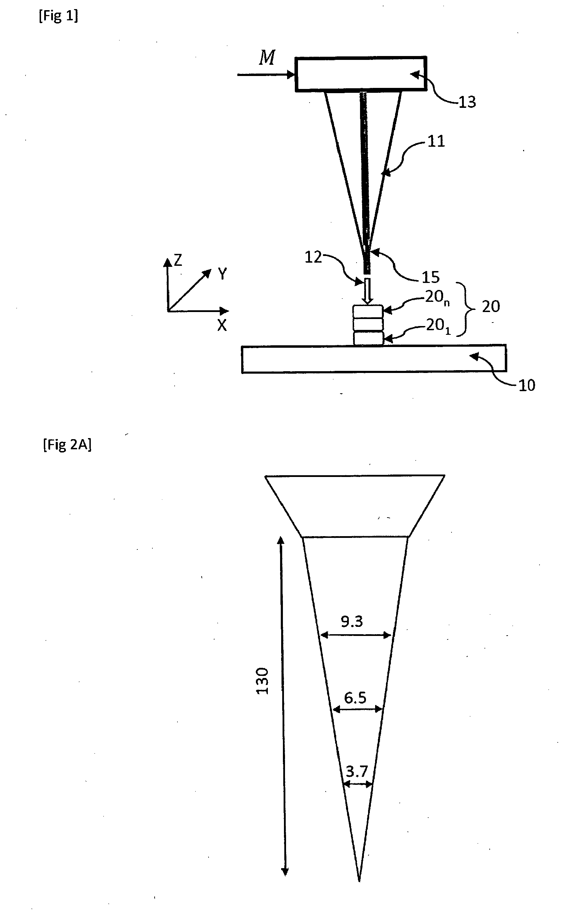

La figure 1 représente un dispositif de fabrication additive de type WAAM, évoqué en lien avec l'art antérieur. Une source d'énergie 11, en l'occurrence une torche, forme un arc électrique 12. Dans ce dispositif, la torche 11 est maintenue par un robot de soudage 13. La pièce 20 à fabriquer est disposée sur un support 10. Dans cet exemple, la pièce fabriquée est un mur s'étendant selon un axe transversal Z perpendiculairement à un plan longitudinal XY défini par le support 10. Sous l'effet de l'arc électrique 12, un fil d'apport 15 entre en fusion pour former un cordon de soudure. Le robot de soudage est commandé par un modèle numérique M. Il est déplacé de façon à former différentes couches 20₁...20ₙ, empilées les unes sur les autres, formant le mur 20, chaque couche correspondant à un cordon de soudure. Chaque couche 20₁...20ₙ s'étend dans le plan longitudinal XY, selon un motif défini par le modèle numérique M.

Le diamètre du fil d'apport est de préférence inférieur à 3 mm. Il peut être compris entre 0.5 mm et 3 mm et est de préférence compris entre 0.5 mm et 2 mm, voire entre 1 mm et 2 mm. Il est par exemple de 1.2 mm.

Les inventeurs ont mis en oeuvre un tel procédé pour réaliser des pièces de grandes dimensions, destinées à former des éléments de structure dans des aéronefs. Ils ont utilisé un procédé tel que décrit dans la demande de brevet FR1753315. Dans cette demande de brevet, on montre qu'en utilisant un alliage de type 2139, on peut obtenir une pièce fabriquée par fabrication additive, dont la dureté Vickers atteint 100 Hv. En appliquant des traitements thermiques de type mise en solution, trempe et revenu (état T6), la dureté Vickers est significativement augmentée, typiquement de 50 % à 60 %. La dureté peut alors atteindre des valeurs proches de 160 Hv. Cependant, les inventeurs ont observé que l'application de traitements thermiques de type trempe pouvait induire une distorsion de la pièce, du fait de la variation brutale de température. La distorsion de la pièce est généralement d'autant plus significative que ses dimensions sont importantes. Or, l'avantage d'un procédé de fabrication additive est précisément d'obtenir une pièce dont la forme, après fabrication est définitive, ou quasi-définitive. La survenue d'une déformation significative résultant d'un traitement thermique est donc à éviter. Par quasi-définitive, il est entendu qu'un usinage de finition peut être effectué sur la pièce après sa fabrication : la pièce fabriquée par fabrication additive s'étend selon sa forme définitive, à l'usinage de finition près.

Ayant constaté ce qui précède, les inventeurs ont cherché une composition d'alliage, formant le matériau d'apport, permettant d'obtenir des propriétés mécaniques acceptables, sans nécessiter l'application de traitements thermiques, subséquents à la formation des couches, risquant d'induire une distorsion. Il s'agit notamment de traitements thermiques impliquant une variation brutale de la température. Ainsi, l'invention permet d'obtenir, par fabrication additive, une pièce dont les propriétés mécaniques sont satisfaisantes, en particulier en termes de dureté. En fonction du type de procédé de fabrication additive choisi, le matériau d'apport peut se présenter sous la forme d'un fil ou d'une poudre.

Les inventeurs ont constaté qu'en combinant une teneur en cuivre de 5 % à 8 %, et une teneur en magnésium supérieure ou égale à 4 %, et inférieure ou égale à 8 %, on peut obtenir une pièce fabriquée par fabrication additive, et par exemple par WAAM, dont les propriétés mécaniques sont suffisamment satisfaisantes pour ne pas imposer l'application de traitements thermiques impliquant de grandes variations de température, et notamment une trempe. Les compositions décrites dans les exemples qui suivent permettent d'obtenir une dureté de l'ordre de 125 Hv (1^{er} exemple), voire supérieure à 160 Hv (2^{e} exemple). De plus, la combinaison des teneurs en cuivre et en magnésium précitées permet d'obtenir une faible sensibilité à la crique. Des alliages d'aluminium présentant de telles teneurs sont particulièrement compatibles avec la mise en oeuvre d'un procédé de fabrication additive.

Outre Cu et Mg, l'alliage peut comporter d'autres éléments d'alliage. Les inventeurs ont observé qu'une teneur en Si, inférieure ou égale à 8 %, peut permettre d'obtenir une dureté élevée, et d'améliorer la sensibilité à la crique. Une teneur en Zn, inférieure ou égale à 10 %, peut également être envisagée.

Selon une variante, Zn peut être absent de l'alliage ou présent dans une quantité inférieure à 0.05 %, en tant qu'impureté.

L'alliage peut également comporter Sc, selon une fraction massique inférieure ou égale à 1 %.

L'alliage peut également comporter au moins un parmi : Sc : 0.05 % - 1 % et/ou Zr : 0.05 % - 2 %, de préférence Sc : 0.05 % - 1 % et Zr : 0.05 % - 2 %.

L'alliage peut également comporter d'autres éléments, comme décrits suite à la présentation des exemples. En particulier, l'alliage peut comporter Zr, selon une fraction massique de 0.05 % à 2 %, de préférence de 0.05 à 0.5 %, en particulier de 0.05 % à 0.25 %. L'ajout de Zr dans les teneurs telles que décrites dans la présente description peut permettre d'affiner la structure granulaire après fusion. Zr peut également avoir un Impact positif sur les propriétés mécaniques et la ductilité.

### EXEMPLES

### Exemple 1

Une première série d'essais a été réalisée en utilisant un premier alliage A1, dont la composition est précisée dans le tableau 1 en pourcentages de fraction massique. On a comparé les propriétés mécaniques obtenues avec un alliage de type 2319, ce dernier étant considéré comme un alliage de référence pour la fabrication additive de pièces en aluminium. Les fractions massiques des éléments sont identiques, à l'exception de Mg, dont la fraction massique est respectivement de 5 % (alliage A1) et 0 % (alliage Ref 1, qui correspond à un alliage 2319).

**[Tableau 1]**

| | Si | Fe | Cu | Mn | Mg | Ti | V | Zr |
|---|---|---|---|---|---|---|---|---|
| A1 | 0.1% | 0.2 % | 5.7% | 0.3% | 5% | 0.1% | 0.1% | 0.1% |
| Ref 1 | 0.1% | 0.2 % | 5.7% | 0.3% | 0% | 0.1% | 0.1% | 0.1% |

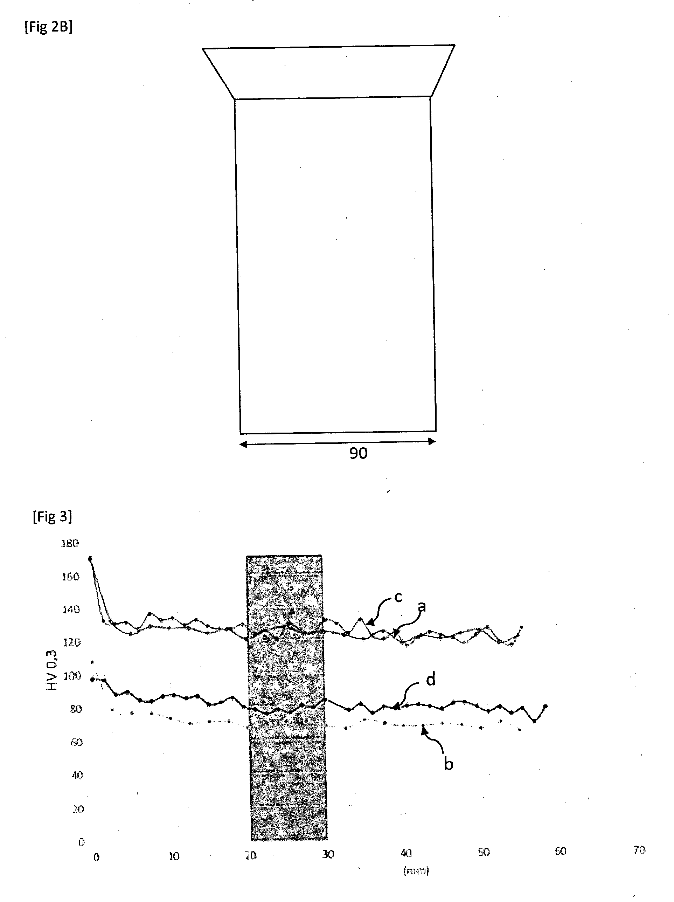

Chaque alliage a été coulé dans un moule en coin tel que représenté dans les Figures 2A et 2B. Les Figures 2A et 2B sont des vues de face et de côté des pièces de test ainsi formées. Les valeurs numériques renseignées sur les figures 2A et 2B sont les dimensions, exprimées en mm. On dispose ainsi d'une pièce moulée dont une portion d'intérêt correspond à la vitesse de refroidissement subie lors de la mise en oeuvre d'un procédé de type WAAM. On a considéré que la portion d'intérêt correspond à la partie de la pièce dont l'épaisseur est située autour de 3.7 mm.

La figure 3 représente des essais de profils de dureté établis le long des pièces de test, l'axe des abscisses correspondant à la distance par rapport à la pointe de la pièce. L'axe des ordonnées représente la dureté HV 0.3. Les courbes a, b, c et d sont les profils correspondant respectivement à :
- la pièce en alliage A1, sans revenu ;
- la pièce de référence en alliage Ref 1 (2319), sans revenu ;
- la pièce en alliage A1, la fabrication de la pièce étant suivie d'un revenu (15h - 175 °C) ;
- la pièce de référence en alliage Ref 1 (2319), la fabrication de la pièce étant suivie d'un revenu (15h - 175 °C).

La zone grisée de la figure 3 correspond à la portion d'intérêt représentative des conditions de solidification d'une couche de métal formée par la méthode WAAM.

On a établi une moyenne des différentes valeurs de dureté mesurées dans la portion d'intérêt. Les résultats sont les suivants :
- pièce en alliage A1, sans revenu : 125 ;
- pièce de référence Ref 1, sans revenu: 70 ;
- pièce en alliage A1, avec revenu : 126 ;
- pièce de référence Ref 1 avec revenu : 80.

On observe que :
- la pièce en alliage A1 présente une dureté significativement supérieure à la pièce de référence Ref 1, avec ou sans revenu, l'augmentation de dureté moyenne étant d'environ 75 % (sans revenu) et 60 % (avec revenu).
- le revenu améliore la dureté de la pièce de référence Ref 1 ;
- le revenu n'améliore pas significativement la dureté de la pièce en alliage A1. Sans être liés par la théorie, les inventeurs attribuent cela au fait qu'il n'y a pas suffisamment d'éléments en solution solide, ce qui n'entraîne pas ou peu de précipitation lors du revenu.

Les propriétés de fissuration à chaud ont été examinées, de façon à vérifier la compatibilité de l'alliage A1 avec une mise en oeuvre dans un procédé de fabrication additive. L'indice de criquabilité est établi à partir du calcul de la perte de charge du liquide résiduel qui alimente le retrait qui accompagne la solidification. Plus la perte de charge calculée sur l'intervalle de solidification est importante, plus l'apparition de fissuration est aisée lors de la solidification, ce qui correspond à un indice de sensibilité à la crique élevé. Pour calculer cet indice, on simule, pour chaque alliage, un chemin de solidification, par exemple en utilisant le code de calcul CALPHAD, acronyme de Computer Coupling of Phase Diagrams and Thermochemistry. L'indice de criquabilité quantifie la tendance de l'alliage à fissurer durant la solidification. Les valeurs de l'indice de criquabilité pour l'alliage A1 et pour l'alliage de référence Ref 1 (2319) sont respectivement de 9 et de 14.

Cette série d'essais montre qu'en utilisant l'alliage A1, il est possible d'obtenir, par fabrication additive, une pièce dont la dureté et la sensibilité à la crique sont satisfaisantes, sans traitement thermique de type mise en solution et trempe. La pièce formée par fabrication additive ne subit alors aucune déformation.

### Exemple 2

Au cours d'une deuxième série d'essais, on a utilisé des alliages comportant une teneur plus élevée en Si et/ou en Sc. Les compositions en pourcentages de fraction massique sont données dans le Tableau 2 ci-après.

**[Tableau 2]**

| Alliage | Si | Fe | Cu | Mn | Mg | Ti | V | Zr | Sc |
|---|---|---|---|---|---|---|---|---|---|
| A1 | 0.1% | 0.2 % | 5.7% | 0.3% | 5% | 0.1% | 0.1% | 0.1% | |
| A2 | 0.1% | 0.2 % | 5.7% | 0.3% | 5% | 0.1% | 0.1% | 0.1% | 0.2 % |
| A3 | 3% | 0.2 % | 5.7% | 0.3% | 5% | 0.1% | 0.1% | 0.1% | 0.3% |
| A4 | 3% | 0.2 % | 5.7% | 0.3% | 6% | 0.1% | 0.1% | 0.1% | |
| Ref 2 | 0.1% | 0.2 % | 5.7% | 0.3% | 0.5% | 0.1% | 0.1% | 0.1% | 0.2 % |
| Ref 3 | 0.1% | 0.2 % | 5.7% | 0.3% | | 0.1% | 0.1% | 0.1% | |
| Ref 4 | 5% | 0.2 % | 5.7% | 0.3% | | 0.1% | 0.1% | 0.1% | |
| Ref 5 | 2.2 % | 0.28% | | | 5.5% | | | | |
| Ref 6 | 3.5% | 0.28% | | | 7.5% | | | | |
| Ref 7 | 10% | | | | 0.4% | | | | |
| Ref 8 | 1.7% | 8.5% | | | | | 1.3% | | |

Les alliages de référence Ref 3 et Ref 8 correspondent respectivement à des alliages 2319 et 8009. L'alliage A1 correspond à l'alliage décrit dans l'exemple 1.

A partir de chaque alliage, on a obtenu des pièces de test telles que celles décrites en lien avec l'exemple 1. Un revenu post fabrication (175°C - 15 h) a été appliqué sur les pièces formées à partir d'alliages ne comportant pas de scandium : A4, Ref 3 à Ref 7. Un recuit post fabrication (325°C - 4 h) a été appliqué sur les pièces formées à partir d'alliages comportant du scandium. Le recuit permet une précipitation de dispersoïdes Al₃Sc améliorant la dureté.

On a mesuré la dureté sur chaque pièce de test :
- à l'état brut, c'est-à-dire après fabrication et avant le traitement thermique ;
- après le traitement thermique post fabrication, qu'il s'agisse du revenu ou du recuit.

La dureté Vickers peut notamment être déterminée en suivant la méthode décrite dans les normes EN ISO 6507-1 (Matériaux métalliques - Essai de dureté Vickers - Partie 1 : Méthode d'essai), EN ISO 6507-2 (Matériaux métalliques - Essai de dureté Vickers - Partie 2 : Vérification et étalonnage des machines d'essais), EN ISO 6507-3 (Matériaux métalliques - Essai de dureté Vickers - Partie 3 : Étalonnage des blocs de référence) et EN ISO 6507-4 (Matériaux métalliques
- Essai de dureté Vickers - Partie 4 : Tables des valeurs de duretés).

Le tableau 3 présente les valeurs de dureté Hv 0.3 mesurées.

**[Tableau 3]**

| Alliage | Composition | Dureté état brut | Dureté après revenu | Dureté après recuit |
|---|---|---|---|---|
| A1 | Al-5.7Cu-5Mg | 126 | 128 | |
| A2 | Al-5.7Cu-5Mg-0.2Sc | 125 | | 138 |
| A3 | Al-5.7Cu-5Mg-3Si -0.3Sc | 161 | | 115 |
| A4 | Al-5.7Cu-6Mg-3Si | 164 | | |
| Ref 2 | Al-5.7Cu-0.5Mg-0.2Sc | 97 | | 103 |
| Ref 3 | 2319 - Al-5.7Cu | 70 | 80 | |
| Ref 4 | Al-5.7Cu-5Si | 101 | 105 | |
| Ref 5 | Al-5.5Mg-2.2Si | 90 | 104 | |
| Ref 6 | Al-5.5Mg-3.5Si | 90 | 96 | |
| Ref 7 | Al-10Si-0.4Mg | 84 | 100 | |
| Ref 8 | 8009 | 79 | | |

On observe que :
- sur les pièces obtenues sans traitement thermique, les valeurs maximales de dureté sont obtenues avec les alliages A1 à A4, les valeurs obtenues étant supérieures à 120Hv.
- Les résultats optimaux en termes de dureté sont obtenus avec les alliages A3 à A4, pour lesquels la teneur en Cu et Mg est supérieure à 5 %, et présentant une teneur en Si relativement élevée (3 %). La comparaison des alliages Ref 2 (0.5 % Mg) et A2 (5 % Mg) montre l'effet de Mg. La composition A4 (5.7 % Cu - 6 % Mg - 3 % Si) semble optimale en termes de dureté.
- La présence de Si améliore la dureté à l'état brut, comme le montre la comparaison des alliages A1 ou A2 (sans Si) et A3 et A4 (avec Si) ;
- L'application d'un traitement thermique de type recuit et revenu peut augmenter la dureté. Toutefois, lorsqu'un alliage comporte à la fois Si et Sc, l'application d'un traitement thermique post fabrication ne semble pas à recommander. Cf. alliage A3.
- La présence de scandium ne semble pas avoir d'effet significatif sur la dureté à l'état brut : cf. résultats relatifs aux alliages A4 (sans Sc) et A3 (avec Sc), indiquant des duretés équivalentes. Par contre, en l'absence de silicium et en présence de scandium (voir alliage A2), une étape de recuit post-fabrication permet d'augmenter la dureté par rapport à l'état brut.

Un indice de criquabilité, tel que décrit en lien avec l'exemple 1, a été calculé pour certains alliages. Les valeurs obtenues sont présentées dans le tableau 4.

**[Tableau 4]**

| Alliage | Composition | Indice de criquabilité |
|---|---|---|
| A1 | Al-5.7Cu-5Mg | 9 |
| A2 | Al-5.7Cu-5Mg-0.2Sc | 9 |
| A4 | Al-5.7Cu-6Mg-3Si | 7 |
| Ref 1, Ref 3 (alliage 2319) | Al-5.7 Cu | 14 |

On observe que les alliages présentant des duretés optimales (A1, A2, A4) présentent un indice de criquabilité faible. Ces alliages sont donc bien adaptés à un procédé de fabrication additive. On considère que l'indice de criquabilité correspondant à l'alliage A3 est similaire à celui de l'alliage A4.

Les essais présentés ci-dessus montrent qu'il est optimal de disposer d'un alliage :
- dont la teneur en Cu est supérieure ou égale à 5 %, en étant par exemple de 5 % à 8 % ;
- dont la teneur en Mg est supérieure ou égale à 4 %, et de préférence inférieure ou égale à 8 %. De préférence, la teneur en Mg est supérieure ou égale à 4.5 % ou à 5 % et inférieure ou égale à 8 %.

L'alliage peut comporter du silicium, la fraction massique étant de préférence supérieure ou égale à 1 %, et de préférence supérieure ou égale à 2 %. La fraction massique de silicium est de préférence inférieure ou égale à 8 %, voire à 6 %. L'alliage peut comporter du zinc, selon une fraction massique inférieure ou égale à 10 %.

L'alliage peut comporter du scandium, la fraction massique étant inférieure ou égale à 1 %.

### Eléments supplémentaires

L'alliage peut également comporter des éléments supplémentaires, par exemple choisis parmi : W, Nb, Ta, Y, Yb, Er, Cr, Hf, Ce, La, Nd, Sm, Gd, Yb, Tb, Tm, Lu, Ni, Cr, Co, Mo et/ou du mischmétal, selon une fraction massique inférieure ou égale à 2 %, et de préférence inférieure ou égale à 1 % pour chaque élément. De préférence, la fraction massique totale des éléments supplémentaires est inférieure ou égale à 5 %, et de préférence à 3 % ou à 2 %. De tels éléments peuvent engendrer la formation de dispersoïdes ou de phases intermétalliques fines, ce qui permet d'augmenter la dureté.

L'alliage peut comporter d'autres éléments supplémentaires choisis parmi Sr, Ba, Sb, Bi, Ca, P, B, In, Sn, selon une fraction massique inférieure ou égale à 1 %, et de préférence inférieure ou égale à 0.1 %, et encore de préférence inférieure ou égale à 700 ppm pour chaque élément. De préférence, la fraction massique totale de ces éléments est inférieure ou égale à 2 %, et de préférence à 1 %. Il peut être préférable d'éviter une addition excessive de Bi, la fraction massique préférée étant alors inférieure à 0.05 %, et de préférence inférieure à 0.01 %.

L'alliage peut comporter d'autres éléments supplémentaires tels que :
- Ag, selon une fraction massique de 0.06 % à 1 % ;
- et/ou Li, selon une fraction massique de 0.06 % à 2 % ;

Ces éléments peuvent agir sur la résistance du matériau par précipitation durcissante ou par leur effet sur les propriétés de la solution solide.

Selon un mode de réalisation, l'alliage peut également comprendre au moins un élément pour affiner les grains et éviter une microstructure colonnaire grossière, par exemple AlTiC ou AlTiB₂, par exemple un affinant sous forme AT5B ou AT3B, selon une quantité inférieure ou égale à 50 kg/tonne, et de préférence inférieure ou égale à 20 kg/tonne, encore plus préférentiellement égale à 12 kg/tonne pour chaque élément, et inférieure ou égale à 50 kg/tonne, et de préférence inférieure ou égale à 20 kg/tonne pour l'ensemble de ces éléments.

### Traitement thermique

Suite à la formation des couches, un traitement thermique peut être appliqué. Il peut comporter une mise en solution suivie d'une trempe et d'un revenu. Cependant, comme précédemment décrit, la mise en solution peut engendre une déformation de la pièce formée par fabrication additive, notamment lorsque les dimensions de cette dernière sont élevées. Aussi, lorsqu'un traitement thermique est appliqué, il est préférable que sa température soit inférieure à 500°C ou de préférence inférieure à 400 °C, et par exemple comprise entre 100°C et 400°C. Il peut en particulier s'agir d'un revenu ou d'un recuit. D'une façon générale, le traitement thermique peut permettre un détensionnement des contraintes résiduelles et/ou une précipitation supplémentaire de phases durcissantes.

Selon un mode de réalisation, le procédé peut comporter compression isostatique à chaud (CIC). Le traitement CIC peut notamment permettre d'améliorer les propriétés d'allongement et les propriétés en fatigue. La compression isostatique à chaud peut être réalisée avant, après ou à la place du traitement thermique. Avantageusement, la compression isostatique à chaud est réalisée à une température de 250°C à 550°C et de préférence de 300°C à 450°C, à une pression de 500 à 3000 bars et pendant une durée de 0,5 à 10 heures.

L'éventuel traitement thermique et/ou la compression isostatique à chaud peut permettre en particulier d'augmenter la dureté du produit obtenu et/ou de réduire la porosité, ce qui permet d'améliorer la tenue en fatigue et la ductilité.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution.

Cependant le procédé selon l'invention est avantageux, car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines.

Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

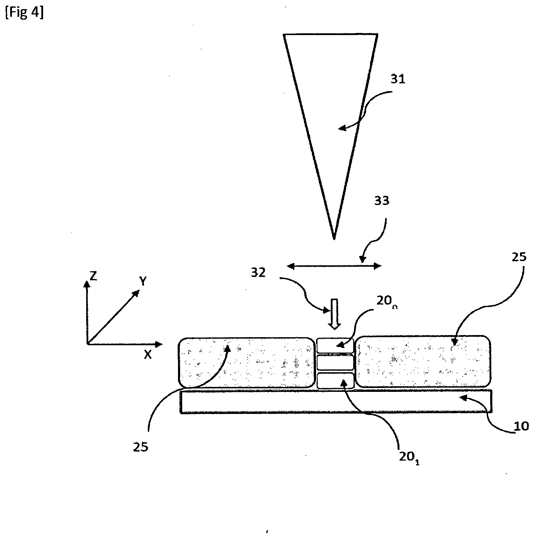

Bien que décrit en lien avec une méthode de fabrication additive de type WAAM, le procédé peut être appliqué à d'autres méthodes de fabrication additive. Il peut s'agir par exemple d'un procédé par fusion sélective par laser (Selective Laser Melting ou SLM). La figure 4 schématise le fonctionnement d'un tel procédé. Le métal d'apport 25 se présente sous la forme d'une poudre. Une source d'énergie, en l'occurrence une source laser 31, émet un faisceau laser 32. La source laser est couplée au matériau d'apport par un système optique 33, dont le mouvement est déterminé en fonction d'un modèle numérique M. Le faisceau laser 32 suit un mouvement selon le plan longitudinal XY, décrivant un motif dépendant du modèle numérique. L'interaction du faisceau laser 32 avec la poudre 25 engendre une fusion sélective de cette dernière, suivie d'une solidification, résultant en la formation d'une couche 20₁...20ₙ. Lorsqu'une couche a été formée, elle est recouverte de poudre 25 du métal d'apport et une autre couche est formée, superposée à la couche préalablement réalisée. L'épaisseur de la poudre formant une couche peut par exemple être comprise entre 10 et 150 µm.

La poudre peut présenter au moins l'une des caractéristiques suivantes :
- taille moyenne de particules de 5 à 100 µm, de préférence de 5 à 25 µm, ou de 20 à 60 µm. Les valeurs données signifient qu'au moins 80 % des particules ont une taille moyenne dans la gamme spécifiée ;
- forme sphérique. La sphéricité d'une poudre peut par exemple être déterminée en utilisant un morphogranulomètre ;
- bonne coulabilité. La coulabilité d'une poudre peut par exemple être déterminée selon la norme ASTM B213 ou la norme ISO 4490 :2018. Selon la norme ISO 4490 :2018, le temps d'écoulement est de préférence inférieur à 50 s ;
- faible porosité, de préférence de 0 à 5 %, plus préférentiellement de 0 à 2 %, encore plus préférentiellement de 0 à 1 % en volume. La porosité peut notamment être déterminée par microscopie à balayage électronique ou par pycnométrie à l'hélium (voir la norme ASTM B923);
- absence ou faible quantité (moins de 10 %, de préférence moins de 5 % en volume) de petites particules (1 à 20 % de la taille moyenne de la poudre), dites satellites, qui collent aux particules plus grosses.

D'autres procédés sont par ailleurs envisageables, par exemple, et de façon non limitative :
- frittage sélectif par laser (Selective Laser Sintering ou SLS) ;
- frittage direct du métal par laser (Direct Metal Laser Sintering ou DMLS) ;
- frittage sélectif par chauffage (Selective Heat Sintering ou SHS) ;
- fusion par faisceau d'électrons (Electron Beam Melting ou EBM) ;
- dépôt par fusion laser (Laser Melting Deposition) ;
- dépôt direct par apport d'énergie (Direct Energy Déposition ou DED) ;
- dépôt direct de métal (Direct Metal Deposition ou DMD) ;
- dépôt direct par laser (Direct Laser Déposition ou DLD) ;
- technologie de dépôt par Laser (Laser Déposition Technology) ;
- ingénierie de formes nettes par laser (Laser Engineering Net Shaping) ;
- technologie de plaquage par laser (Laser Cladding Technology) ;
- technologie de fabrication de formes libres par laser (Laser Freeform Manufacturing Technology ou LFMT) ;
- dépôt par fusion laser (Laser Metal Deposition ou LMD) ;
- pulvérisation à froid (Cold Spray Consolidation ou CSC) ;
- fabrication additive par friction (Additive Friction Stir ou AFS) ;
- frittage par étincelle au plasma ou frittage flash (Field Assisted Sintering Technology, FAST ou spark plasma sintering) ; ou
- soudage par friction rotative (Inertia Rotary Friction Welding ou IRFW).

## Revendications

1. Procédé de fabrication d'une pièce (20) comportant une formation de couches métalliques successives (20₁...20ₙ), superposées les unes aux autres, chaque couche étant formée par le dépôt d'un métal d'apport (15, 25), le métal d'apport étant soumis à un apport d'énergie de façon à entrer en fusion et à constituer, en se solidifiant, ladite couche, dans lequel le métal d'apport (15, 25) est un alliage d'aluminium comportant les éléments d'alliage suivant (% en poids) :
- Cu : 5 % - 8 % ;
- Mg : 4 % - 8 % ;
- éventuellement Si : 0 % - 8 % ;
- éventuellement Zn : 0 % - 10 % ;
ainsi que :
- autres éléments :< 3 % individuellement, et < 10 % au total, les autres éléments comportant : Sc et/ou Fe et/ou Mn et/ou Ti et/ou Zr et/ou V et/ou Cr et/ou Ni ;
- impuretés : < 0.05 % individuellement, et au total < 0.15 % ;
reste aluminium.

2. Procédé selon la revendication 1, dans lequel l'alliage d'aluminium est tel que Mg : 4.5 % à 8%.

3. Procédé selon la revendication 1 ou 2, dans lequel l'alliage d'aluminium comporte, les autres éléments suivants :
- Fe : 0.05 % - 2 % ;
- et/ou Mn : 0.05 % - 0.4 % ;
- et/ou Ti : 0.05 % - 0.4 % ;
- et/ou Zr : 0.05 % - 0.5 % ;
- et/ou V : 0.08 % - 0.5 % ;
- et/ou Sc : 0.05 % - 0.5 % ;
- et/ou Cr : 0.05 % - 0.5 % ;
- et/ou Ni : 0.05 % - 0.5 %.

4. Procédé selon l'une quelconque des revendications précédentes, dans lequel la fraction massique des autres éléments, pris en totalité, est inférieure à 5 %.

5. Procédé selon l'une quelconque des revendications précédentes, dans lequel l'alliage d'aluminium comporte Si : 0.05 % - 1 %, de préférence 0.2 % - 1 %.

6. Procédé selon l'une quelconque des revendications 1 à 4 dans lequel l'alliage d'aluminium comporte Si > 1 %.

7. Procédé selon l'une quelconque des revendications 1, 2 ou 4, dans lequel l'alliage d'aluminium comporte au moins un parmi : Sc : 0.05 % - 1 % et/ou Zr : 0.05 % - 2 %, de préférence Sc : 0.05 % - 1 % et Zr : 0.05 % - 2 %.

8. Procédé selon l'une quelconque des revendications précédentes, comportant, suite à la formation des couches (20₁...20ₙ), une application d'au moins un traitement thermique.

9. Procédé selon la revendication 8, dans lequel le traitement thermique est un revenu ou un recuit.

10. Procédé selon l'une quelconque des revendications précédentes, ne comportant pas de traitement thermique de type trempe suite à la formation des couches.

11. Procédé selon l'une quelconque des revendications précédentes, dans lequel le métal d'apport est issu d'un fil d'apport (15), dont l'exposition à un arc électrique (12) résulte en une fusion localisée suivie d'une solidification, de façon à former une couche solide (20₁...20ₙ).

12. Procédé selon l'une quelconque des revendications 1 à 10, dans lequel le métal d'apport prend la forme d'une poudre (25), dont l'exposition à un faisceau de lumière (12) ou de particules chargées résulte en une fusion localisée suivie d'une solidification, de façon à former une couche solide (20₁...20ₙ).

13. Fil d'apport, destiné à être utilisé en tant que matériau d'apport d'un procédé de fabrication additive, **caractérisé en ce qu'**il est constitué d'un alliage d'aluminium, comportant les éléments d'alliage suivant (% en poids) :
- Cu : 5 % - 8 % ;
- Mg : 4 % - 8 % ;
- au moins un parmi : Sc : 0.05 % - 1 % et/ou Zr : 0.05 % - 2 %, de préférence Sc : 0.05 % - 1 % et Zr : 0.05 % - 2 %.;
- éventuellement Si : 0 % - 8 % ;
- éventuellement Zn : 0 % - 10 % ;
ainsi que
- autres éléments : < 2 % individuellement, et < 10 % au total, les autres éléments comportant : Fe et/ou Mn et/ou Ti et/ou V et/ou Cr et/ou Ni ;
- impuretés : < 0.05 % individuellement, et au total < 0.15 % ;
reste aluminium.

## Patentansprüche

1. Verfahren zur Herstellung eines Gegenstandes (20), eine Bildung aufeinanderfolgender Metallschichten (20₁ ...20ₙ) beinhaltend, die übereinanderliegen, wobei jede Schicht durch die Abscheidung eines Füllmetalls (15, 25) gebildet wird, wobei das Füllmetall einer Energiezufuhr unterzogen wird, um zu schmelzen und durch Verfestigen die Schicht zu fertigen, wobei das Füllmetall (15, 25) eine Aluminiumlegierung ist, die die folgenden Legierungselemente beinhaltet (Gew.-%):
- Cu: 5 % - 8 %;
- Mg: 4 % - 8 %;
- möglicherweise Si: 0 % - 8 %;
- möglicherweise Zn: 0 % - 10 %;
sowie:
- übrige Elemente: < 3 % einzeln und < 10 % insgesamt, wobei die übrigen Elemente beinhalten: Sc und/oder Fe und/oder Mn und/oder Ti und/oder Zr und/oder V und/oder Cr und/oder Ni;
- Verunreinigungen: < 0,05 % einzeln und insgesamt < 0,15 %;
der Rest ist Aluminium.

2. Verfahren nach Anspruch 1, wobei die Aluminiumlegierung derart ist, dass Mg: 4,5 % bis 8 %.

3. Verfahren nach Anspruch 1 oder 2, wobei die Aluminiumlegierung folgende übrigen Elemente beinhaltet:
- Fe: 0,05 % - 2 %;
- und/oder Mn: 0,05 % - 0,4 %;
- und/oder Ti: 0,05 % - 0,4 %;
- und/oder Zr: 0,05 % - 0,5 %;
- und/oder V: 0,08 % - 0,5 %;
- und/oder Sc: 0,05 % - 0,5 %;
- und/oder Cr: 0,05 % - 0,5 %;
- und/oder Ni: 0,05 % - 0,5 %.

4. Verfahren nach einem der vorhergehenden Ansprüche, wobei der Massenanteil der übrigen Elemente, insgesamt genommen, weniger als 5 % beträgt.

5. Verfahren nach einem der vorhergehenden Ansprüche, wobei die Aluminiumlegierung Si: 0,05 % - 1 % beinhaltet, vorzugsweise 0,2 % - 1 %.

6. Verfahren nach einem der Ansprüche 1 bis 4, wobei die Aluminiumlegierung Si > 1 % beinhaltet.

7. Verfahren nach einem der Ansprüche 1, 2 oder 4, wobei die Aluminiumlegierung mindestens eines von: Sc: 0,05 % - 1 % und/oder Zr: 0,05 % - 2 % beinhaltet, vorzugsweise Sc: 0,05 % - 1 % und Zr: 0,05 % - 2 %.

8. Verfahren nach einem der vorhergehenden Ansprüche, das nach der Bildung der Schichten (20₁ ...20ₙ) eine Anwendung von mindestens einer Wärmebehandlung beinhaltet.

9. Verfahren nach Anspruch 8, wobei die Wärmebehandlung ein Anlassen oder Glühen ist.

10. Verfahren nach einem der vorhergehenden Ansprüche, das keine Wärmebehandlung vom Typ Abschreckung nach der Bildung der Schichten beinhaltet.

11. Verfahren nach einem der vorhergehenden Ansprüche, wobei das Füllmetall aus einem Fülldraht (15) entsteht, dessen Exponierung an einem Lichtbogen (12) zu einem lokalisierten Schmelzen und anschließender Erstarrung führt, um eine feste Schicht (20₁ ...20ₙ) zu bilden.

12. Verfahren nach einem der Ansprüche 1 bis 10, wobei das Füllmetall die Form eines Pulvers (25) annimmt, dessen Exponierung an einem Strahl von Licht (12) oder geladenen Teilchen zu einem lokalisierten Schmelzen und anschließender Erstarrung führt, um eine feste Schicht (20₁ ...20ₙ) zu bilden.

13. Fülldraht, der zur Verwendung als Füllmaterial in einem additiven Herstellungsverfahren bestimmt ist, **dadurch gekennzeichnet, dass** er aus einer Aluminiumlegierung besteht, die folgenden Legierungselemente beinhaltend (Gew.-%):
- Cu: 5 % - 8 %;
- Mg: 4 % - 8 %;
- mindestens eines von: Sc: 0,05 % - 1 % und/oder Zr: 0,05 % - 2 %, vorzugsweise Sc: 0,05 % - 1 % und Zr: 0,05 % - 2 %;
- möglicherweise Si: 0 % - 8 %;
- möglicherweise Zn: 0 % - 10 %;
sowie:
- übrige Elemente: < 2 % einzeln und < 10 % insgesamt, wobei die übrigen Elemente beinhalten: Fe und/oder Mn und/oder Ti und/oder V und/oder Cr und/oder Ni;
- Verunreinigungen: < 0,05 % einzeln und insgesamt < 0,15 %;
der Rest ist Aluminium.

## Claims

1. Process for manufacturing a part (20) including a formation of successive metal layers (20₁...20ₙ), which are superimposed on each other, each layer being formed by depositing a filler metal (15, 25), the filler metal being subjected to a supply of energy so as to become molten and to constitute, upon solidifying, said layer, wherein the filler metal (15, 25) is an aluminum alloy including the following alloy elements (% by weight);
- Cu: 5% - 8%;
- Mg: 4% - 8%;
- optionally Si: 0% - 8%;
- optionally Zn: 0% - 10%;
as well as:
- other elements: < 3% individually, and < 10 % in total, the other elements including: Sc and/or Fe and/or Mn and/or Ti and/or Zr and/or V and/or Cr and/or Ni;
- impurities: < 0.05% individually, and in total < 0.15%;
the remainder being aluminum.

2. Process according to claim 1, wherein the aluminum alloy is such that Mg: 4.5% to 8%.

3. Process according to claim 1 or 2, wherein the aluminum alloy includes the following other elements:
- Fe: 0.05% - 2%;
- and/or Mn: 0.05% - 0.4%;
- and/or Ti: 0.05% - 0.4%
- and/or Zr: 0.05% - 0.5%;
- and/or V: 0.08% - 0.5%;
- and/or Sc: 0.05% - 0.5%;
- and/or Cr: 0.05% - 0.5%;
- and/or Ni: 0.05% - 0.5%.

4. Process according to any one of the preceding claims, wherein the mass fraction of the other elements, taken as a whole, is less than 5%.

5. Process according to any one of the preceding claims, wherein the aluminum alloy includes Si: 0.05% - 1%, preferably 0.2% - 1%.

6. Process according to any one of claims 1 to 4, wherein the aluminum alloy includes Si > 1%.

7. Process according to any one of claims 1, 2 or 4, wherein the aluminum alloy includes at least one of: Sc: 0.05% - 1% and/or Zr: 0.05% - 2%, preferably Sc: 0.05% - 1% and Zr: 0.05% - 2%.

8. Process according to any one of the preceding claims, including, following the formation of the layers (20₁...20ₙ), an application of at least one thermal treatment.

9. Process according to claim 8, wherein the thermal treatment is an aging or an annealing.

10. Process according to any one of the preceding claims, not including a quenching type thermal treatment following the formation of the layers.

11. Process according to any one of the preceding claims, wherein the filler metal is obtained from a filler wire (15), the exposure of which to an electric arc (12) results in a localized melting followed by a solidification, so as to form a solid layer (20₁...20ₙ).

12. Process according to any one of claims 1 to 10, wherein the filler metal takes the form of a powder (25), the exposure of which to a light beam (12) or charged particles results in a localized melting followed by a solidification, so as to form a solid layer (20₁...20ₙ).

13. Filler wire, intended to be used as a filler material of an additive manufacturing process, **characterized in that** it is formed from an aluminum alloy, including the following alloy elements (% by weight):
- Cu: 5% - 8%;
- Mg: 4% - 8%;
- at least one among: Sc: 0.05% - 1% and/or Zr: 0.05% - 2%, preferably Sc: 0.05% - 1% and Zr: 0.05% - 2%;
- optionally Si: 0% - 8%;
- optionally Zn: 0% - 10%;
as well as
- other elements: < 2% individually, and < 10 % in total, the other elements including: Fe and/or Mn and/or Ti and/or V and/or Cr and/or Ni;
- impurities: < 0.05% individually, and in total < 0.15%;
the remainder being aluminum.
